# EUROPÄISCHE PATENTANMELDUNG

(11) **EP 4 838 118 A1**
(43) Veröffentlichungstag der Anmeldung: **11.11.2026**
(21) Anmeldenummer: 26160582.8
(22) Anmeldetag: 25.02.2026
(51) Int. Cl.: F16K 31/126, F16K 31/46

(54) **STECKVERBINDER**

(30) Priorität: 05.05.2025 DE 102025117081
(71) Anmelder: SISTO Armaturen S.A., 6468 Echternach (LU)
(72) Erfinder: Schaal, Andreas, 6468 Echternach (LU); Hackenberger, Bernd, 6468 Echternach (LU)
(74) Vertreter: Busch, Tobias

(57) **Zusammenfassung**

Anordnung mit mindestens einer Armatur (1), die mit einem pneumatischen Stellantrieb (2) gekoppelt ist, welcher mit einer Steuereinheit (9) zusammenwirkt. Die Steuereinheit (9) ist über eine Verbindungsvorrichtung (18) mit einer Systemeinheit verbunden und die Verbindungsvorrichtung (18) umfasst mindestens einen mehrpoligen Steckverbinder (21). Die Systemeinheit wirkt über den Steckverbinder (21) mit dem pneumatischen Stellantrieb (2) zusammen. In die Verbindungsvorrichtung (18) ist mindestens ein manuelles Betätigungselement (22) integriert, das über den Steckverbinder (21) mit dem pneumatischen Stellantrieb (2) zusammenwirkt.

## Beschreibung

Die Erfindung betrifft eine Anordnung mit mindestens einer Armatur, die mit einem pneumatischen Stellantrieb gekoppelt ist, welcher mit einer Steuereinheit zusammenwirkt, wobei die Steuereinheit über eine Verbindungsvorrichtung mit einer Systemeinheit verbunden ist und die Verbindungsvorrichtung mindestens einen mehrpoligen Steckverbinder umfasst, wobei die Systemeinheit über den Steckverbinder mit dem pneumatischen Stellantrieb zusammenwirkt.

Armaturanordnungen wie beispielsweise Membranventile sind essenzielle Komponenten in der industriellen Verfahrenstechnik und werden insbesondere für das Absperren und Dosieren verschiedener Fluide wie Gase, Dämpfe und Flüssigkeiten eingesetzt. Ihr besonderes Konstruktionsmerkmal ist die bewegliche Membran, die eine vollständige Trennung zwischen dem Produktraum und der Umgebung gewährleistet. Dadurch entfallen Wellendurchführungen und -abdichtungen, wodurch die Gefahr von Leckagen oder Verunreinigungen minimiert wird.

Die Einsatzgebiete von Membranventilen sind vielfältig. Einerseits schützen sie das Medium im Produktraum vor äußeren Einflüssen oder Kontaminationen - ein essenzieller Faktor in hochsensiblen Branchen wie der Pharmazie und Biotechnologie. Hier kommen sie beispielsweise bei der Herstellung und dem Transfer von Reinstmedien wie Water for Injection (WFl) oder Produkten wie Blutplasma und Impfstoffen zum Einsatz. Andererseits tragen sie dazu bei, die Umwelt vor potenziell gefährlichen Medien zu schützen, indem sie beispielsweise in Kernkraftwerken zur Steuerung von Kühlwasser oder in der chemischen Industrie zur Regulierung konzentrierter Säuren eingesetzt werden.

Membranventile zeichnen sich durch ihre totraumarme Konstruktion aus. Sie sind so konzipiert, dass sie Ablagerungen von Medienresten verhindern und Kreuzkontaminationen minimieren. Ihr entleerungsoptimiertes Design ermöglicht eine rückstandsfreie Entfernung der geführten Medien, was besonders in sterilen Umgebungen von großer Bedeutung ist.

Ein weiteres zentrales Qualitätsmerkmal ist die Beweglichkeit der Membran, die senkrecht zur Einspannfläche einen Hub ausführen kann. Ihre Beständigkeit hängt maßgeblich vom verwendeten Werkstoff ab. In vielen Anwendungen haben sich Elastomere wie Ethylen-Propylen-Dien-Kautschuk (EPDM) bewährt, da sie eine hohe Elastizität und chemische Beständigkeit bieten. Zur Erhöhung der mechanischen Festigkeit können diese Membranen zusätzlich mit Gewebeeinlagen verstärkt werden.

Ein pneumatischer Stellantrieb ist ein mechanisches Betätigungselement, das die zur Betätigung einer Armatur erforderliche lineare oder rotatorische Bewegung mittels Druckluft erzeugt. Der Stellantrieb wandelt hierbei pneumatische Energie in eine mechanische Stellbewegung um, wodurch ein Ventilschließelement geöffnet oder geschlossen werden kann.

Typischerweise umfasst ein pneumatischer Stellantrieb eine oder mehrere Arbeitskammern, in denen sich unter Einwirkung von Druckluft ein Kolben oder eine Membrane bewegt. Die durch die Kolbenbewegung erzeugte Kraft wird auf die mit dem Stellantrieb gekoppelte Armatur - etwa über eine Ventilspindel oder eine Hubstange - übertragen. Durch gezielte Druckbeaufschlagung der Arbeitskammern kann die Bewegung kontrolliert gesteuert werden.

Eine Steuereinheit für einen pneumatischen Stellantrieb wird auch als Ventilsteuerkopf oder als Steuerkopf bezeichnet. Dabei handelt es sich, um ein elektronisches-pneumatisches Gerät, das zur Kontrolle und/oder Regelung eines pneumatischen Stellantriebs zur Betätigung eines Membranventils verwendet wird.

Ein herkömmlicher Ventilsteuerkopf nach dem Stand der Technik ist in DE 10 2017 121 094 A1 beschrieben. Der beschriebene Ventilsteuerkopf, umfassend ein Gehäuse, eine Steuerelektronik, mindestens ein Steuerventil, Fluidanschlüsse, elektrische Anschlüsse, ein mit einem ersten Ventilschließteil starr gekoppeltes erstes Messobjekt und ein Positionsmesssystem, umfassend eine Messelektronik und einen ersten Positionssensor, wobei der erste Positionssensor eine Position des ersten Messobjekts erfassen kann, und wobei der Ventilsteuerkopf eine Befestigungseinrichtung aufweist, die ausgebildet ist, um einen zweiten Positionssensor anzukoppeln.

In der EP 2 630 396 B1 wird eine elektrische Stellungsermittlungsvorrichtung zum Anbau an ein Ventil beschrieben. Die Vorrichtung umfasst ein Gehäuse mit einem darin beweglich angeordneten Stellmittel. Weiterhin umfasst die Vorrichtung eine am Gehäuse angeordnete Feder. Das Stellmittel wird mit einer Federkraft beaufschlagt. Im Gehäuseoberteil befindet sich eine Positionserfassungseinrichtung. Das Gehäuseoberteil weist weiterhin eine Trägerplatte mit einer Stellmitteleinhausung und einem Außengehäuse auf. Das Stellmittel und die Feder sind innerhalb der Stellmitteleinhausung angeordnet.

Die Steuereinheit ist in der Regel auf der Oberseite des pneumatischen Stellantriebs angeordnet. Die Steuereinheit ist mit dem pneumatischen Stellantrieb und dem Membranventil über mindestens eine oder diverse Anschlüsse verbunden. Die Steuereinheit regelt dabei den Druck in den pneumatischen Leitungen, die den pneumatischen Stellantrieb versorgen.

Hierbei kann die Steuerung des Drucks den Öffnungs- und Schließvorgang des Membranventils präzise steuern.

Bei pneumatisch betätigten Armaturen erfolgt die Schaltansteuerung in der Regel über eine Systemeinheit, beispielsweise eine übergeordnete Prozessleittechnik bzw. SPS. Zudem umfasst die Steuereinheit typischerweise einen Stellungsrückmelder mit integriertem Magnetventil. Eine direkte Vor-Ort-Betätigung der Armatur, etwa zur manuellen Probenahme im laufenden Betrieb, ist mit dieser Systemarchitektur jedoch nicht ohne Weiteres möglich. Üblicherweise wären dafür zusätzliche Handventile oder mechanische Betätigungen erforderlich, deren Integration in die Steuereinheit oder Systemeinheit jedoch oft nicht praktikabel ist.

Aufgabe der Erfindung ist es, eine Anordnung mit einer Armatur bereitzustellen, die auch manuell vor Ort betätigt werden kann. Dabei soll die Bedienung der Anordnung sicher und zuverlässig gewährleistet werden können. Gleichzeitig soll die Betätigung der Anordnung ohne komplexe Umbauten realisiert werden können. Das Membranventil soll sich durch eine preiswerte Herstellungsweise und eine hohe Lebensdauer auszeichnen.

Diese Aufgabe wird erfindungsgemäß durch eine Anordnung mit einer Armatur gemäß den Merkmalen des Anspruchs 1 und einem Verfahren gemäß den Merkmalen des Anspruchs 7 gelöst. Bevorzugte Varianten sind den Unteransprüchen, der Beschreibung und den Figuren zu entnehmen.

Gemäß der Erfindung ist in die Verbindungsvorrichtung mindestens ein manuelles Betätigungselement integriert, das über den Steckverbinder mit dem pneumatischen Stellantrieb zusammenwirkt.

Die Verbindungsvorrichtung umfasst beispielsweise ein Gehäuse, eine Kabeleinführung, mindestens ein Betätigungselement und einen mehrpoligen Steckverbinder.

Das Betätigungselement ist ein funktionales Bauteil innerhalb der Verbindungsvorrichtung, das ein gezieltes elektrisches Signal auslöst, um einen Stellvorgang des pneumatischen Stellantriebs in Gang zu setzen.

Beispielsweise löst das Betätigungselement das elektrische Signal nur während des Betätigens und somit während der Zeitdauer des Betätigens aus.

Bei einer Variante der Erfindung ist das Betätigungselement derart in der Verbindungsvorrichtung integriert, so dass es über den Steckverbinder mit dem pneumatischen Stellantrieb zusammenwirkt, indem der Steckverbinder das elektrische Signal des Betätigungselements im eingesteckten Zustand an die Steuereinheit des pneumatischen Stellantriebs leitet. Die Steuereinheit empfängt das elektrische Signal und wandelt es beispielsweise in ein pneumatisches Signal für einen Öffnungsvorgang des pneumatischen Stellantriebs der Armaturanordnung um.

Beispielsweise ist das Betätigungselement als Drucktaster ausgeführt.

Bei einer Variante der Erfindung öffnet die Armatur der Anordnung, insbesondere das Membranventil, beim und somit während des Drückens des Drucktasters.

Beispielsweise umfasst die Verbindungsvorrichtung ein Winkelgehäuse.

Bei einer Variante der Erfindung weist die Verbindungsvorrichtung ein Winkelgehäuse auf, in das um 90 ° abgewinkelt die Kabeleinführung angeordnet ist. Die Kabeleinführung ist dadurch flexibler auch in beengtem Raum zuführbar, während an dem einen Ende der Steckverbinder und auf dem gegenüberliegenden Ende des Steckverbinders das Betätigungselement angeordnet ist. Dadurch ist sowohl das Winkelgehäuse als auch die Verbindungsvorrichtung besonders kompakt gestaltet ausgeführt.

Beispielsweise umfasst die Verbindungsvorrichtung ein ausschließlich gemeinsames Gehäuse, in das sowohl der Steckverbinder und die Kabeleinführung als auch das Betätigungselement untergebracht sind.

Bei einer Ausführung der Erfindung ist das Winkelgehäuse einstückig ausgebildet.

Bei einer weiteren Ausführung der Erfindung ist das Gehäuse zweigeteilt und wird mit einer Klippverbindung und/oder durch eine Überwurfverbindung wie beispielsweise der Überschraubverbindung des Steckverbinders gefügt.

Beispielsweise ist das Betätigungselement in seiner Position und in seiner vorgegebenen Bewegungsmöglichkeit durch das Winkelgehäuse der Verbindungsvorrichtung geführt. Dabei ermöglicht und begrenzt das Gehäuse die Bewegung des Betätigungselements.

Bei einer weiteren Variante der Erfindung ist das Betätigungselement als Einheit in das Winkelgehäuse der Verbindungsvorrichtung eingeschraubt. Dabei bildet das Betätigungselement sowohl Führung als auch Begrenzung der Betätigungsfunktion.

Bei einer alternativen Variante ist das Betätigungselement in das Winkelgehäuse eingepresst.

Beispielsweise ist der mehrpolige Steckverbinder der Verbindungsvorrichtung als M12-Steckverbinder ausgeführt.

Ein Steckverbinder ist ein elektrisches Verbindungselement, das es ermöglicht, Leitungen mit elektrischen Geräten oder Komponenten wie einer Steuereinheit zu verbinden. Er dient dem Anschluss von Strom oder Signalen, z. B. zum Öffnen/Schließen eines Membranventils einer Armaturanordnung und ist meist steckbar und somit einfach lösbar. Die Steckverbindung ist durch erneutes Einstecken wiederverwendbar bzw. wiederherstellbar.

Ein Winkelstecker ist ein Steckverbinder, bei dem der Kabelausgang nicht gerade, sondern in einem 90°-Winkel zur Einsteckrichtung ausgeführt ist.

Ein M12-Steckverbinder in Winkelausführung ist ein industrieller Rundsteckverbinder mit einem metrischen Gewinde M12 zur Signal- oder Energieübertragung, bei dem der Kabelabgang rechtwinklig zur Steckrichtung angeordnet ist. Diese Bauform wird auch als gewinkelter oder abgewinkelter M12-Stecker bezeichnet.

Ein M12-Steckverbinder in Winkelausführung bietet mehrere praxisrelevante Vorteile, insbesondere bei beengten Einbausituationen oder komplexen Maschinenlayouts. Durch den rechtwinkligen Kabelabgang lässt sich der verfügbare Raum effizient nutzen, da der Stecker nicht axial in den Anschlussraum hineinragt, sondern das Kabel seitlich abgeführt wird. Dies ermöglicht eine platzsparende Installation und ist besonders vorteilhaft in beengten Anordnungsvariationen von Armaturen, an Mehrfacharmaturanordnungskomplexen oder in dicht belegten Automatisierungskomponenten.

Zudem reduziert die Winkelausführung die mechanische Belastung des Kabels, da enge Biegeradien direkt am Steckverbinder vermieden werden. Das steigert die Zuverlässigkeit und Lebensdauer der elektrischen Verbindung, insbesondere in dynamischen Anwendungen mit Bewegung oder Vibration. Auch die Kabelführung lässt sich durch die 90 °-Abführung gezielter gestalten, zum Beispiel entlang von Profilen, Gehäusekanten oder Kabelkanälen, was wiederum zur Übersichtlichkeit und Sicherheit der Installation beiträgt.

Bei einer Variante der Erfindung weist das Betätigungselement mindestens eine elektrisch leitfähige Verbindung zu dem Steckverbinder auf.

Beispielsweise umfasst der Steckverbinder acht Pins zur Übertragung von elektrischen Signalen, vorzugsweise von einer Systemeinheit an die Steuereinheit. Dabei weist das Betätigungselement eine direkte Verbindung zu mindestens einem Pin auf, zumindest während der Betätigung des Betätigungselements. Diese direkte und leitfähige Verbindung leitet beispielsweise beim und während des Betätigens des Betätigungselements ein elektrisches Signal direkt vom Betätigungselement durch die Verbindungsvorrichtung über mindestens einen Pin des Steckverbinders in die Steuereinheit, wodurch beispielsweise ein Vorgang in der Armaturanordnung ausgelöst wird.

Bei einer alternativen Variante der Erfindung umfasst das Betätigungselement ein Drehrad.

Beispielsweise kann über das Drehrad des Betätigungselements der Betrag des elektrischen Signals verändert werden, wodurch beispielsweise der Öffnungsvorgang der Armatur entsprechend angepasst ausgeführt wird.

Erfindungsgemäß löst ein Verfahren einen Vorgang in einer Prozessanlage aus, wobei die Anlage mindestens eine Anordnung mit einer Armatur umfasst, die mit einem pneumatischen Stellantrieb gekoppelt ist, der mit einer Steuereinheit zusammenwirkt, wobei die Steuereinheit über eine Verbindungsvorrichtung mit einer Systemeinheit verbunden ist, und wobei die Verbindungsvorrichtung mindestens einen mehrpoligen Steckverbinder aufweist, über den die Systemeinheit mit dem pneumatischen Stellantrieb zusammenwirkt. Manuelles Betätigen des Betätigungselements löst ein elektrisches Steuersignal aus, das über den Steckverbinder an die Steuereinheit geleitet wird und in der Steuereinheit wird das elektrische Signal in ein pneumatisches Antriebssignal umgewandelt, wobei das pneumatische Steuersignal von der Steuereinheit an den pneumatischen Stellantrieb geleitet wird und dadurch ein Vorgang in der Prozessanlage durch zumindest teilweises Öffnen der Armatur ausgeführt wird.

Die Erfindung betrifft darüber hinaus ein Verfahren zum Auslösen eines Vorgangs in einer Prozessanlage, insbesondere zur gezielten Vor-Ort-Betätigung einer mit einem pneumatischen Stellantrieb ausgestatteten Armatur, beispielsweise eines Membranventils, wobei das Verfahren auf der zuvor beschriebenen erfindungsgemäßen Anordnung basiert.

Das Verfahren nutzt die besondere Ausbildung der Verbindungsvorrichtung, welche ein manuelles Betätigungselement und einen mehrpoligen Steckverbinder umfasst, zur gezielten Steuerung der Armatur über die Steuereinheit. Insbesondere ermöglicht das Verfahren eine gezielte Auslösung eines Stellvorgangs durch eine manuelle Interaktion, wobei die Betätigung direkt an der Verbindungsvorrichtung erfolgt, ohne dass eine zusätzliche mechanische Betätigungseinrichtung oder ein Eingriff in die Systemeinheit notwendig ist.

Das Verfahren umfasst gemäß einer bevorzugten Ausführungsform die folgenden Verfahrensschritte:
Manuelles Betätigen des Betätigungselements zur Auslösung eines elektrischen Steuersignals.

Das Betätigungselement ist beispielsweise als Drucktaster oder als Drehrad oder als Drucktaster mit Drehrad oder als zweigeteilter Drucktaster innerhalb des Gehäuses der Verbindungsvorrichtung ausgebildet. Durch das manuelle Betätigen, etwa durch Drücken oder Drehen, wird ein elektrisches Signal generiert, das als Steuersignal für die weitere Prozesssteuerung dient.

Leiten des elektrischen Steuersignals über den Steckverbinder an die Steuereinheit.

Der mehrpolige Steckverbinder, vorzugsweise als M12-Steckverbinder in Winkelausführung ausgebildet, stellt eine elektrische Schnittstelle zur Steuereinheit her. Das während der Betätigung erzeugte Signal wird über mindestens einen Kontakt, z. B. einen Pin, des Steckverbinders weitergeleitet.

Anders als bei der zuvor beschriebenen Direktverdrahtung, bei dem jeden Pin eine feste Funktion zugeordnet ist, findet beispielsweise bei Feldbussystemen die Kommunikation digital statt, sodass über einen Pin viele verschiedene Informationen bzw. Schaltsignale übertragen werden können. Bei einer Ausführungsvariante kommen AS-Interface oder IO-Link als Alternative zur diskreten Verdrahtung zum Einsatz. In dem Fall kann die Steuerfunktion bspw. das Auslösen der manuellen Probenahme über die Verbindungsvorrichtung, nicht über das Feldbus-System übertragen werden. Jedoch kann ein diskretes Steuersignal über separate Pins, unabhängig von der Bus-Kommunikation, von der Verbindungsvorrichtung an die Steuereinheit übertragen werden.

Umwandeln des elektrischen Steuersignals in der Steuereinheit in ein pneumatisches Antriebssignal.

Die Steuereinheit ist so ausgestaltet, dass sie das empfangene elektrische Signal in ein pneumatisches Ausgangssignal transformiert, z. B. durch Ansteuerung eines internen Magnetventils. Dieses pneumatische Signal entspricht dem Stellbefehl an den pneumatischen Stellantrieb.

Leiten des pneumatischen Steuersignals von der Steuereinheit an den pneumatischen Stellantrieb.

Über interne oder externe pneumatische Leitungen wird das Antriebssignal an die Druckkammer(n) des Stellantriebs geleitet. Der Stellantrieb führt in Reaktion darauf eine definierte mechanische Bewegung aus.

Ausführen des Vorgangs in der Prozessanlage durch zumindest teilweises Öffnen der Armatur.

Infolge der vom Stellantrieb ausgeführten Bewegung wird das mit diesem gekoppelte Ventilschließelement, z. B. die Membran eines Membranventils, bewegt, sodass die Armatur in eine geöffnete oder zumindest teilgeöffnete Stellung überführt wird. Dies erlaubt beispielsweise eine Probenahme in einer Prozessanlage oder ein definiertes Anfahren eines Prozesszustands.

Bei einer Variante der Erfindung öffnet die Armatur vollständig und bliebt solange geöffnet, wie das Betätigungselement betätigt wird.

Bei einer weiteren Variante der Erfindung öffnet die Armatur zu 25 %, vorzugsweise zu 50 %, insbesondere zu 75 % des möglichen Armaturhubs.

In einer Ausführung der Erfindung wird das elektrische Steuersignal ausschließlich während des manuellen Betätigens des Betätigungselements erzeugt. Dies bedeutet, dass die Wirkung des Signals zeitlich exakt an die Dauer der Betätigung gekoppelt ist, z. B. solange ein Taster gedrückt wird. Nach Loslassen des Betätigungselements fällt das Signal ab, wodurch sich der Stellantrieb automatisch wieder in seine Ausgangsstellung zurückbewegt.

In einer alternativen oder ergänzenden Ausführungsform der Erfindung wird das elektrische Steuersignal nur nach Freigabe durch die Systemeinheit ausgelöst. Hierbei ist eine Freigabe über die Prozessleittechnik oder ein übergeordnetes Steuerungssystem, wie beispielsweise einer SPS, erforderlich, etwa zur Vermeidung unerwünschter Betätigungen oder zur Freigabe von Probenahmen nur in definierten Prozesszuständen.

In einer weiteren Ausführung beinhaltet die Verbindungsvorrichtung ein Identifikationselement zur Sicherstellung des befugten Ausführens der lokalen Steuerfunktion. Beispielsweise kann eine Berechtigungskontrolle elektronisch über einen integrierten NFC-Chip oder mechanisch über einen integrierten Schlüssel-Schalter erfolgen.

Gemäß einer weiteren Verfahrensvariante kann das Steuersignal wahlweise durch das manuelle Betätigungselement oder durch die Steuereinheit ausgelöst werden. Dies erlaubt eine flexible Umschaltung zwischen Vor-Ort-Bedienung, beispielsweise bei der Durchführung einer Wartung oder einer Probenahme, und automatisierter Prozesssteuerung im Regelbetrieb.

Bei einer weiteren Ausführungsform der Erfindung wird das elektrische Steuersignal zur Initialisierung der Armaturanordnung in der Systemeinheit erzeugt. Diese Variante erlaubt es, die gesamte Armatur samt Stellantrieb und Steuereinheit beispielsweise beim erstmaligen Inbetriebnehmen und/oder nach einem Anlagenneustart, einer Wartung oder einem Batchwechsel in einen definierten Ausgangszustand zu überführen.

Bei einer besonders vorteilhaften Ausführung der Erfindung kann der Vorgang in der Prozessanlage durch Verändern des elektrischen Steuersignals angepasst werden. Hierzu kann das Betätigungselement beispielsweise als Drehrad oder als mehrstufiger Taster ausgeführt sein, sodass durch Variation der Signalstärke, -dauer oder -frequenz unterschiedliche Stellungen des Stellantriebs und damit Teilhübe der Armatur realisiert werden können.

Eine konkrete Ausführungsform sieht beispielsweise hierfür ein zweistufiges oder geteiltes Betätigungselement vor, das durch ein abgestuftes Signal z. B. ein teilweises oder vollständiges Öffnen der Armatur auslöst. Dies erlaubt eine feinfühlige Bedienung der Armatur mit nur einem kompakten Bedienelement.

Weitere Merkmale und Vorteile der Erfindung ergeben sich aus der Beschreibung von Ausführungsbeispielen anhand von Zeichnungen und aus den Zeichnungen selbst.

Dabei zeigt:
Fig. 1 eine perspektivische Darstellung einer Anordnung mit einer Armatur,
Fig. 2 eine perspektivische Darstellung einer Verbindungsanordnung,
Fig. 3 eine weitere perspektivische Darstellung der Verbindungsanordnung,
Fig. 4 eine Schnittdarstellung der Verbindungsanordnung.

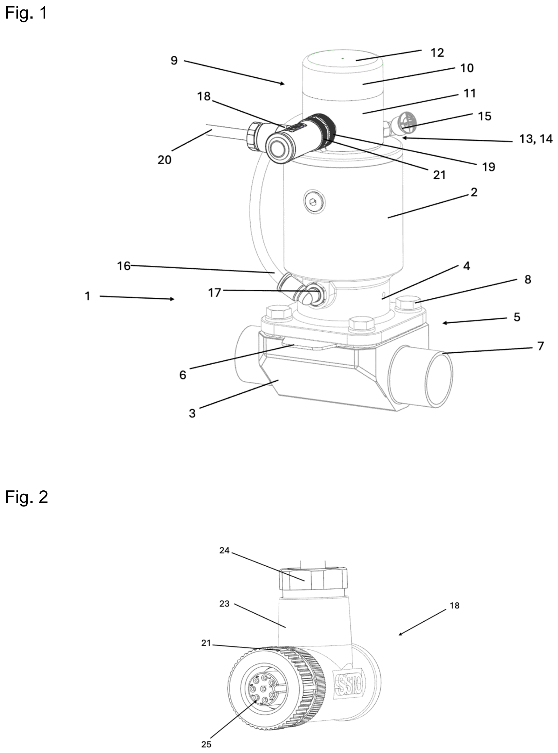

Die in Fig. 1 dargestellte Anordnung mit einer Armatur 1 ist in der Ausführung als Durchgangsmembranventil mit einem pneumatischen Stellantrieb 2 ausgebildet.

Das Gehäuseunterteil 3 und die Haube 4 bilden zusammen das Armaturgehäuse 5, das die Membran 6 aufnimmt. Das Gehäuseunterteil 3 kann mit einem Rohrleitungssystem 7 durch eine Schweißverbindung verbunden werden. Die Haube 4 der Armatur 1 bildet den oberen Teil des Armaturgehäuse 5 und dient als mechanische Aufnahme für den Stellantrieb 2.

Die Membran 6 trennt zwei Räume in der Armatur 1 voneinander und besteht aus Ethylen-Propylen-Dien-Kautschuk (EPDM). Die Membran 6 ist mithilfe von Befestigungsmitteln 8 zwischen der Haube 4 und dem Gehäuseunterteil 3 fixiert und eingespannt.

Die Steuereinheit 9 setzt sich aus einem oberen Gehäusebauteil 10 und einem unteren Gehäusebauteil 11 zusammen. Das obere Gehäusebauteil 10 dient unter anderem der optischen Stellungsrückmeldung der Armatur 1 und weist eine transparente Gehäusewand 12 auf, wodurch die Sichtbarkeit von LEDs zur Stellungsrückmeldung erzielt wird.

Im unteren Gehäusebauteil 11 sind ein nicht sichtbarer Versorgungsanschluss 13, ein Arbeitsanschluss 14 und der Entlüftungsanschluss 15 verbaut. Der Arbeitsanschluss 14 weist eine pneumatische Verbindungsleitung 16 zum Eingang 17 des pneumatischen Stellantriebs 2 auf.

Die Verbindungsvorrichtung 18 ist in den Steckeingang 19 der Steuereinheit 9 eingesteckt und verbindet die nicht dargestellte Systemeinheit mittels eines Kabels 20 mit der Steuereinheit 9, so dass die Systemeinheit über den Steckverbinder 21 der Verbindungsvorrichtung 18 mit dem pneumatischen Stellantrieb 2 zusammenwirken kann, um Vorgänge an der Armatur 1 auszulösen.

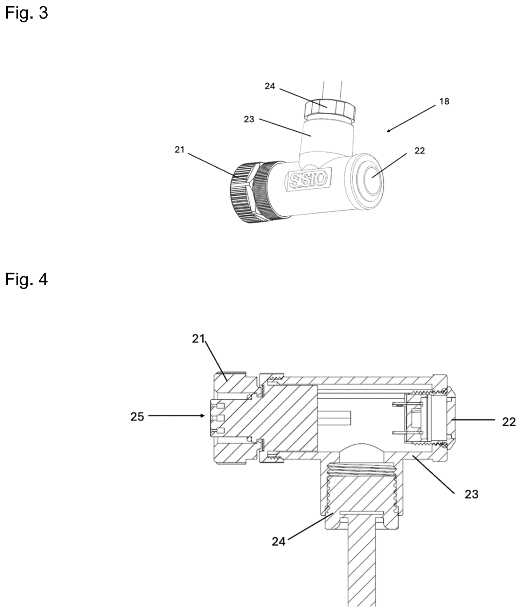

In Fig. 2, Fig. 3 und in Fig. 4 ist die Verbindungsvorrichtung 18 perspektivisch und im Schnitt dargestellt. Im Folgenden werden die Figuren 2 - 4 gemeinsam beschrieben.

In die Verbindungsvorrichtung 18 ist in der dargestellten Ausführungsvariante ein manuelles Betätigungselement 22 in der Ausführung als Drucktaster integriert, das über den Steckverbinder 21 mit dem pneumatischen Stellantrieb 2 zusammenwirkt.

Die Verbindungsvorrichtung 18 umfasst ein Winkelgehäuse 23, in das um 90 ° abgewinkelt die Kabeleinführung 24 angeordnet ist. Die Kabeleinführung 24 ist dadurch flexibel auch in beengtem Raum zuführbar, während an dem einen Ende der Steckverbinder 21 und auf dem gegenüberliegenden Ende des Steckverbinders 21 das Betätigungselement 22 angeordnet ist.

Der mehrpolige Steckverbinder 21 ist als M12-Steckverbinder mit acht Pins 25 ausgeführt. Das Betätigungselement 22 weist in der dargestellten Ausführungsvariante eine elektrisch leitfähige Verbindung zu dem Steckverbinder 21 auf.

Der Steckverbinder 21 überträgt mit seinen acht Pins 25 elektrische Signale von der nicht dargestellten Systemeinheit an die Steuereinheit 9. Dabei weist das Betätigungselement 22 während der Betätigung eine direkte Verbindung zu einem Pin 25 auf.

Beim Drücken des Betätigungselements 22 wird ein Vorgang in einer Prozessanlage durch ein Verfahren ausgelöst, wobei das manuelle Betätigen des Betätigungselements 22 ein elektrisches Steuersignal auslöst, das über den Steckverbinder 21 an die Steuereinheit 9 geleitet wird und in der Steuereinheit 9 wird das elektrische Signal in ein pneumatisches Antriebssignal umgewandelt, wobei das pneumatische Steuersignal von der Steuereinheit 9 an den pneumatischen Stellantrieb 2 geleitet wird und dadurch ein Vorgang in der Prozessanlage durch zumindest teilweises Öffnen der Armatur 1 ausgeführt wird.

### Bezugszeichenliste

| | | | |
|---|---|---|---|
| 1 | Armatur | 15 | Entlüftungsanschluss |
| 2 | Pneumatischer Stellantrieb | 16 | pneumatische Verbindungsleitung |
| 3 | Gehäuseunterteil | 17 | Eingang |
| 4 | Haube | 18 | Verbindungsvorrichtung |
| 5 | Armaturgehäuse | 19 | Steckeingang |
| 6 | Membran | 20 | Kabel |
| 7 | Rohrleitungssystem | 21 | Steckverbinder |
| 8 | Befestigungsmittel | 22 | Manuelles Betätigungselement |
| 9 | Steuereinheit | 23 | Winkelgehäuse |
| 10 | Oberes Gehäusebauteil | 24 | Kabeleinführung |
| 11 | Unteres Gehäusebauteil | 25 | Pin |
| 12 | Gehäusewand | | |
| 13 | Versorgungsanschluss | | |
| 14 | Arbeitsanschluss | | |

## Patentansprüche

1. Anordnung mit mindestens einer Armatur (1), die mit einem pneumatischen Stellantrieb (2) gekoppelt ist, welcher mit einer Steuereinheit (9) zusammenwirkt, wobei die Steuereinheit (9) über eine Verbindungsvorrichtung (18) mit einer Systemeinheit verbunden ist und die Verbindungsvorrichtung (18) mindestens einen mehrpoligen Steckverbinder (21) umfasst, wobei die Systemeinheit über den Steckverbinder (21) mit dem pneumatischen Stellantrieb (2) zusammenwirkt,
**dadurch gekennzeichnet,**
**dass** in die Verbindungsvorrichtung (18) mindestens ein manuelles Betätigungselement (22) integriert ist, das über den Steckverbinder (21) mit dem pneumatischen Stellantrieb (2) zusammenwirkt.

2. Anordnung nach Anspruch 1, **dadurch gekennzeichnet, dass** das Betätigungselement (22) als Drucktaster ausgeführt ist.

3. Anordnung nach Anspruch 1 oder 2, **dadurch gekennzeichnet, dass** die Verbindungsvorrichtung (18) ein Winkelgehäuse (23) umfasst.

4. Anordnung nach einem der Ansprüche 1 bis 3, **dadurch gekennzeichnet, dass** der mehrpolige Steckverbinder (21) als M12-Steckverbinder ausgeführt ist.

5. Anordnung nach einem der Ansprüche 1 bis 4, **dadurch gekennzeichnet, dass** das Betätigungselement (22) mindestens eine elektrisch leitfähige Verbindung zu dem mehrpoligen Steckverbinder (21) aufweist.

6. Anordnung nach einem der Ansprüche 1 bis 5, **dadurch gekennzeichnet, dass** das Betätigungselement (22) ein Drehrad umfasst.

7. Verfahren zum Auslösen eines Vorgangs in einer Prozessanlage, umfassend mindestens eine Anordnung mit einer Armatur(1), die mit einem pneumatischen Stellantrieb (2) gekoppelt ist, der mit einer Steuereinheit (9) zusammenwirkt, wobei die Steuereinheit (9) über eine Verbindungsvorrichtung (18) mit einer Systemeinheit verbunden ist, und wobei die Verbindungsvorrichtung (18) mindestens einen mehrpoligen Steckverbinder (21) aufweist, über den die Systemeinheit mit dem pneumatischen Stellantrieb (2) zusammenwirkt,
**umfassend die folgenden Schritte:**
- manuelles Betätigen des Betätigungselements (22) zur Auslösung eines elektrischen Steuersignals,
- Leiten des elektrischen Steuersignals über den Steckverbinder (21) an die Steuereinheit (9),
- Umwandeln des elektrischen Steuersignals in der Steuereinheit (9) in ein pneumatisches Antriebssignal,
- Leiten des pneumatischen Steuersignals von der Steuereinheit (9) an den pneumatischen Stellantrieb (2),
- Ausführen des Vorgangs in der Prozessanlage durch zumindest teilweises Öffnen der Armatur (1).

8. Verfahren nach Anspruch 7, **dadurch gekennzeichnet, dass** das elektrische Steuersignal während dem manuellen Betätigen des Betätigungselement (22) erzeugt wird.

9. Verfahren nach Anspruch 7 oder 8, **dadurch gekennzeichnet, dass** das elektrische Steuersignal nur nach Freigabe der Systemeinheit ausgelöst werden kann

10. Verfahren nach Anspruch 7 oder 8, **dadurch gekennzeichnet, dass** das elektrische Steuersignal entweder vom manuellen Betätigungselement (22) oder von der Systemeinheit ausgelöst werden kann.

11. Verfahren nach einem der Ansprüche 7 bis 10, **dadurch gekennzeichnet, dass** das elektrische Steuersignal zur Initialisierung der Anordnung mit mindestens einer Armatur (1) in der Systemeinheit erzeugt wird.

12. Verfahren nach einem der Ansprüche 7 bis 11, **dadurch gekennzeichnet, dass** durch das Einstellen des Steuersignals die Ausführung des Vorgangs angepasst wird.
